# EUROPEAN PATENT APPLICATION

(11) **EP 3 866 161 A1**
(43) Date of publication of application: **18.08.2021**
(21) Application number: 19870340.7
(22) Date of filing: 17.07.2019
(51) Int. Cl.: G10L 15/24, G06F 3/01, G06F 3/023, G06F 3/16, G06K 9/00, G06K 9/03, G10L 15/06, G10L 15/18, G10L 15/22

(54) **INFORMATION PROCESSING DEVICE, INFORMATION PROCESSING METHOD, AND PROGRAM**

(30) Priority: 09.10.2018 JP 2018191263
(71) Applicant: Sony Group Corporation, Tokyo 108-0075 (JP)
(72) Inventor: ISHIKAWA, Tsuyoshi, Tokyo 108-0075 (JP)
(74) Representative: MFG Patentanwälte Meyer-Wildhagen Meggle-Freund Gerhard PartG mbB
(86) International application number: PCT/JP2019/028010
(87) International publication number: WO 2020/075358

(57) **Abstract**

An information processing device (10) includes: a recognition unit that recognizes input information by a user as a character string; and a complement unit that complements the recognized character string on the basis of an image analysis result of real space corresponding to a visual field of the user when the character string is recognized.

## Description

### TECHNICAL FIELD

The present disclosure relates to an information processing device, an information processing method, and a program.

### BACKGROUND ART

A technology for capturing an image of a user's visual field range according to the user's operating state is proposed. Furthermore, a technology for acquiring an image in a pointing direction pointed by the user and detecting an object pointed by the user by image recognition is proposed.

### CITATION LIST

### PATENT DOCUMENT

Patent Document 1: WO 2017/221720
Patent Document 2: Japanese Patent Application Laid-Open No. 2015-89060

### SUMMARY OF THE INVENTION

### PROBLEMS TO BE SOLVED BY THE INVENTION

In that connection, there is a technology to perform voice recognition on contents uttered by the user and predict contents of which the user intends to perform character input, and it is required to improve accuracy of a voice recognition result or character input prediction. For example, for voice recognition, when the user gives utterance, the contents uttered by the user may be inaudible due to ambient noise. In such a case, since phonemes cannot be identified from a sound waveform converted from the uttered contents, conversion into a character string is performed by matching the phoneme of an audible part with a dictionary. As a result, the contents intended by the user cannot be acquired. Furthermore, even if the phoneme can be identified from the sound waveform converted from the uttered contents, if the character string corresponding to the uttered contents of the user has not been registered in the dictionary, the contents intended by the user cannot be acquired. That is, the above-described conventional technology does not improve the accuracy of the voice recognition result.

Therefore, the present disclosure proposes an information processing device, an information processing method, and a program that can improve the accuracy of voice recognition result or character input prediction.

### SOLUTIONS TO PROBLEMS

An information processing device according to the present disclosure includes: a recognition unit configured to recognize input information by a user as a character string; and a complement unit configured to complement the recognized character string on the basis of an image analysis result of real space corresponding to a visual field of the user when the character string is recognized.

### EFFECTS OF THE INVENTION

The present disclosure can improve the accuracy of voice recognition result or character input prediction. Note that advantageous effects described here are not necessarily restrictive, and any of the effects described in the present disclosure may be applied.

### BRIEF DESCRIPTION OF DRAWINGS

Fig. 1 is a block diagram schematically showing one example of a functional configuration of an information processing device according to a first embodiment.
Fig. 2 is a diagram showing one example of conversion candidate information.
Fig. 3 is a diagram showing one example of a voice recognition dictionary.
Fig. 4 is a block diagram schematically showing one example of a functional configuration of a voice recognition unit.
Fig. 5 is a diagram showing one example of the information processing device according to the first embodiment.
Fig. 6 is a flowchart showing one example of a procedure of an information processing method according to the first embodiment.
Fig. 7 is a diagram schematically showing one example of the information processing method according to the first embodiment.
Fig. 8 is a block diagram showing one example of a functional configuration of an information processing device according to a modification of the first embodiment (2).
Fig. 9 is a block diagram schematically showing one example of a functional configuration of an information processing device according to a second embodiment.
Fig. 10 is a diagram showing one example of conversion candidate information.
Fig. 11 is a diagram showing one example of a prediction input dictionary.
Fig. 12 is a block diagram schematically showing one example of a functional configuration of an input processing unit.
Fig. 13 is a flowchart showing one example of a procedure of an information processing method according to the second embodiment.
Fig. 14A is a diagram schematically showing one example of the information processing method according to the second embodiment (1).
Fig. 14B is a diagram schematically showing one example of the information processing method according to the second embodiment (2).
Fig. 14C is a diagram schematically showing one example of the information processing method according to the second embodiment (3).
Fig. 15 is a block diagram showing one example of a hardware configuration of the information processing device.

### MODE FOR CARRYING OUT THE INVENTION

Embodiments of the present disclosure will be described in detail below with reference to the drawings. Note that in each of the following embodiments, the same parts are denoted with the same reference signs, and thus duplicate descriptions will be omitted.

### (First embodiment)

### [Configuration of information processing device according to first embodiment]

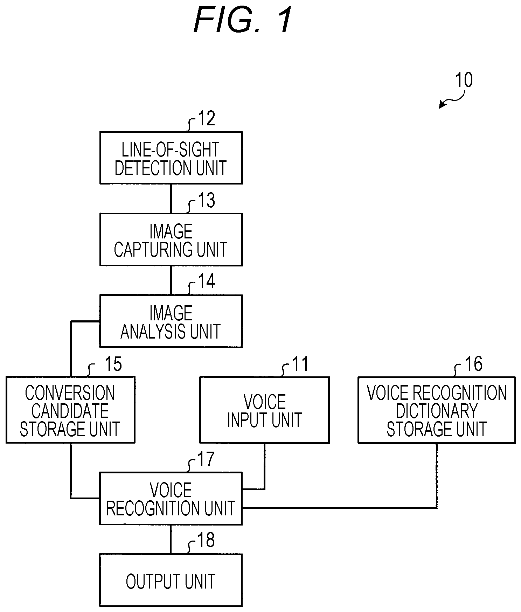

Fig. 1 is a block diagram schematically showing one example of a functional configuration of an information processing device according to a first embodiment. The information processing device 10 includes a voice input unit 11, a line-of-sight detection unit 12, an image capturing unit 13, an image analysis unit 14, a conversion candidate storage unit 15, a voice recognition dictionary storage unit 16, a voice recognition unit 17, and an output unit 18.

The voice input unit 11 detects voice, which is input information from a user of the information processing device 10. The detected voice is passed to the voice recognition unit 17. The voice input unit 11 is, for example, a microphone.

The line-of-sight detection unit 12 detects a line-of-sight position of the user of the information processing device 10. As the line-of-sight detection unit 12, for example, a device that acquires a Purkinje image of an eyeball by using infrared ray (IR) light emission and directly acquires a line-of-sight direction can be used. The line-of-sight detection unit 12 detects the line-of-sight position of the user when the voice input unit 11 inputs uttered information by the user.

The image capturing unit 13 captures a visual field range including a close observation area, which is the user's line-of-sight position on real space detected by the line-of-sight detection unit 12. The visual field range includes a predetermined range of close observation area centered on the user's line-of-sight position. For example, the visual field range is defined as a range captured by the image capturing unit 13 that is disposed at substantially the same height as the user's eye and is oriented in the same direction as orientation of the user's face. The close observation area exists within the visual field range. The image capturing unit 13 is, for example, a camera.

The image analysis unit 14 analyzes image data captured by the image capturing unit 13 and extracts text data. The image analysis unit 14 performs image analysis on an area in the image data corresponding to the close observation area of real space detected by the line-of-sight detection unit 12. Furthermore, the image analysis unit 14 acquires a phoneme string from the extracted text data and stores a pair of the extracted text data and the phoneme string as conversion candidate information in the conversion candidate storage unit 15.

The image data includes a signboard and the like. The signboard generally includes character information, but also includes meta information such as a picture or signboard color other than the character information. For the character information, the image analysis unit 14 converts the character information into a character string, which is text data, by optical character recognition (OCR) technology. Furthermore, for the meta information, the image analysis unit 14 searches for the meta information and acquires text information obtained as a result of the search as a character string. For example, for the signboard, if the picture included in the signboard is a picture of a horse, the meta information is "horse", and if the signboard color is red and white, the meta information is "red" and "white." In a case where the search for meta information is performed, the search is performed by connecting to the Internet via a communication unit (not shown). Furthermore, image analysis processing in a cloud may be used to acquire the meta information.

Moreover, the image analysis unit 14 may perform an image search using a certain range of image in the image data and acquire text information obtained as a result of the search as a character string. For example, in a case where the image data includes a picture, an image search is performed for this picture, and text information obtained as a result of the search is acquired as a character string. Alternatively, in a case where there is coloring information in the visual field range in the image data, an image search is performed on the image range having this coloring information, and text information obtained as a result of the search is acquired as text data.

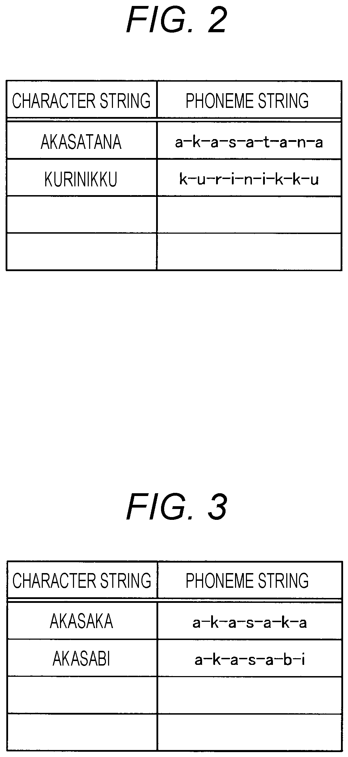

The conversion candidate storage unit 15 transitorily stores the conversion candidate information acquired by the image analysis unit 14. Fig. 2 is a diagram showing one example of the conversion candidate information. The conversion candidate information is information in which a character string and a phoneme string are associated with each other as described above. The conversion candidate information in the conversion candidate storage unit 15 is deleted, for example, when voice input by the user to the voice input unit 11 is finished. The conversion candidate information is used during voice recognition by the voice recognition unit 17.

The voice recognition dictionary storage unit 16 stores a voice recognition dictionary. Fig. 3 is a diagram showing one example of the voice recognition dictionary. As shown in Fig. 3, the voice recognition dictionary is information in which a character string that is a general word is associated with a phoneme string thereof. The voice recognition dictionary is used during voice recognition by the voice recognition unit 17. The voice recognition dictionary storage unit 16 corresponds to a dictionary information storage unit.

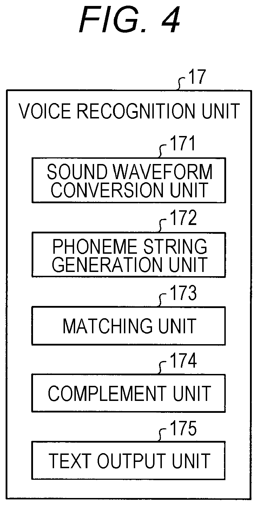

The voice recognition unit 17 performs voice recognition processing on the user voice input from the voice input unit 11, and outputs text data obtained by complementing the voice. The voice recognition unit 17 corresponds to a recognition unit and a complement unit. Fig. 4 is a block diagram schematically showing one example of a functional configuration of the voice recognition unit. The voice recognition unit 17 includes a sound waveform conversion unit 171, a phoneme string generation unit 172, a matching unit 173, a complement unit 174, and a text output unit 175.

The sound waveform conversion unit 171 converts the user voice input from the voice input unit 11 into a voice waveform. The phoneme string generation unit 172 identifies phonemes included in the converted voice waveform and generates a phoneme string that is a sequence of phonemes. The phoneme string generated by the phoneme string generation unit 172 corresponds to a character string of a first form. Note that for distinction from the phoneme string registered in the conversion candidate information and the voice recognition dictionary, hereinafter the phoneme string generated from a voice is also referred to as an input phoneme string. It is preferable that all phonemes are identified by the phoneme string generation unit 172, but some phoneme may not be identified. In that case, for example, a symbol indicating that the phoneme cannot be identified is placed in a part of the phoneme that cannot be identified. The sound waveform conversion unit 171 and the phoneme string generation unit 172 correspond to a recognition unit.

The matching unit 173 matches the input phoneme string with the phoneme string in the conversion candidate information or the voice recognition dictionary, and extracts the character string corresponding to the phoneme string having the highest degree of similarity among the phoneme strings with the degree of similarity equal to or higher than a threshold. Here, the matching unit 173 preferentially applies the conversion candidate information when performing matching. Then, in a case where there is no matching in the conversion candidate information, the voice recognition dictionary is applied to perform matching. In general, the conversion candidate information has a smaller number of registered character strings (candidates) than the voice recognition dictionary. Therefore, by applying the conversion candidate information in preference to the voice recognition dictionary during matching processing, in a case where there is a candidate in the conversion candidate information, the candidate can be acquired in a short time. Furthermore, the recognition accuracy improves as the number of character strings to be matched decreases. Note that the degree of similarity can be, for example, a proportion of the phonemes that agree with the phonemes of the phoneme string in the conversion candidate information or the voice recognition dictionary to the phonemes included in the input phoneme string.

The matching processing includes a case of performing matching processing on an input phoneme string in which all phonemes are identified, and a case of performing matching processing on an input phoneme string in which some of the phonemes are not identified. In a case where matching processing is performed on the input phoneme string in which all phonemes are identified, the matching unit 173 first performs matching processing on the sequence of the input phoneme string by using the phoneme string in the conversion candidate information. In a case where matching fails as a result of the matching processing, that is, in a case where there are only phoneme strings with the degree of similarity less than the threshold, the matching unit 173 performs matching processing on the sequence of input phoneme strings by using the phoneme string in the voice recognition dictionary.

In a case where matching processing is performed on the input phoneme string in which some of the phonemes are not identified, the matching unit 173 first performs matching processing on the identified part of the sequence of the input phoneme string by using the phoneme string in the conversion candidate information. In a case where matching fails as a result of the matching processing, that is, in a case where there are only phoneme strings with the degree of similarity less than the threshold, the matching unit 173 performs matching processing on the identified part of the sequence of the input phoneme string by using the phoneme string in the voice recognition dictionary.

On the basis of the result of the matching processing by the matching unit 173, the complement unit 174 complements the input phoneme string by using the character string corresponding to the phoneme string with the highest degree of similarity in the conversion candidate information or the voice recognition dictionary. The character string complemented by the complement unit 174 corresponds to the character string in a second form. In this specification, besides complementing the input phoneme string by using the character string corresponding to the phoneme string in the conversion candidate information or in the voice recognition dictionary, the complement includes a case of replacing the input phoneme string with the character string corresponding to the phoneme string having the highest degree of similarity in the conversion candidate information or in the voice recognition dictionary, or a case of correcting the input phoneme string by using the character string corresponding to the phoneme string having the highest degree of similarity in the conversion candidate information or in the voice recognition dictionary. For example, in a case where the input phoneme string does not include an unidentified phoneme, the input phoneme string may be replaced by using the conversion candidate information or the voice recognition dictionary to obtain the character string intended by the user. Furthermore, even in a case where a part of the input phoneme string includes an unidentified phoneme, the unidentified phoneme in the phoneme string may be complemented to obtain the character string intended by the user. Moreover, even in a case where a part of the input phoneme string is identified as a phoneme different from contents the user utters, the wrong phoneme in the phoneme string may be corrected to obtain the character string intended by the user. The image analysis unit 14, the matching unit 173 and the complement unit 174 correspond to a complement unit.

The text output unit 175 outputs the character string complemented by the complement unit 174 to the output unit 18.

The output unit 18 outputs the character string that is a voice recognition result from the voice recognition unit 17. For example, the output unit 18 is a display device, and displays the character string that is the voice recognition result as text data in an input field of a search screen displayed on the display device. Alternatively, the output unit 18 is a voice output device, and outputs, by voice feedback, the character string that is the voice recognition result as text data.

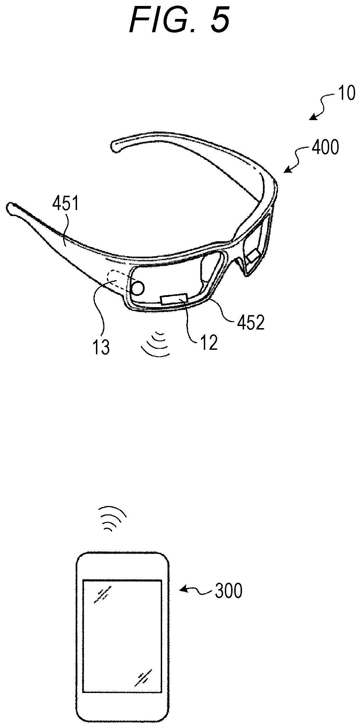

Fig. 5 is a diagram showing one example of the information processing device according to the first embodiment. Fig. 5 shows a case where the information processing device 10 includes a smartphone 300 and a wearable device 400. In this example, the wearable device 400 is a spectacles-type head mount display. Furthermore, the wearable device 400 may be a hat-type head mount display. The head mount display may be of a video transmission type or an optical transmission type. The smartphone 300 includes the voice input unit 11, the image analysis unit 14, the conversion candidate storage unit 15, the voice recognition unit 17 and the output unit 18. The wearable device 400 includes the line-of-sight detection unit 12 and the image capturing unit 13. The wearable device 400 and the smartphone 300 are, for example, communicably connected to each other by wireless communication such as Bluetooth (registered trademark). Furthermore, a wearable device including the voice input unit 11 may be separately provided to be connected to the smartphone 300 communicably with each other by wireless communication.

The image capturing unit 13 is preferably provided at a position on the wearable device 400 that allows an image forward of the user to be captured when the user wears the wearable device 400. The image capturing unit 13 is preferably provided at substantially the same position as the user's eye position. For example, for the spectacles-type head mount display, the image capturing unit 13 is preferably provided on a frame 451. This makes it possible to capture a range that is almost similar to the user's visual field range. The line-of-sight detection unit 12 is preferably provided at a position where, for example, the user's eye position can be detected when the user wears the wearable device 400 For example, for the spectacles-type head mount display, the line-of-sight detection unit 12 is preferably provided near the lower side of a rim 452.

### [Information processing procedure according to first embodiment]

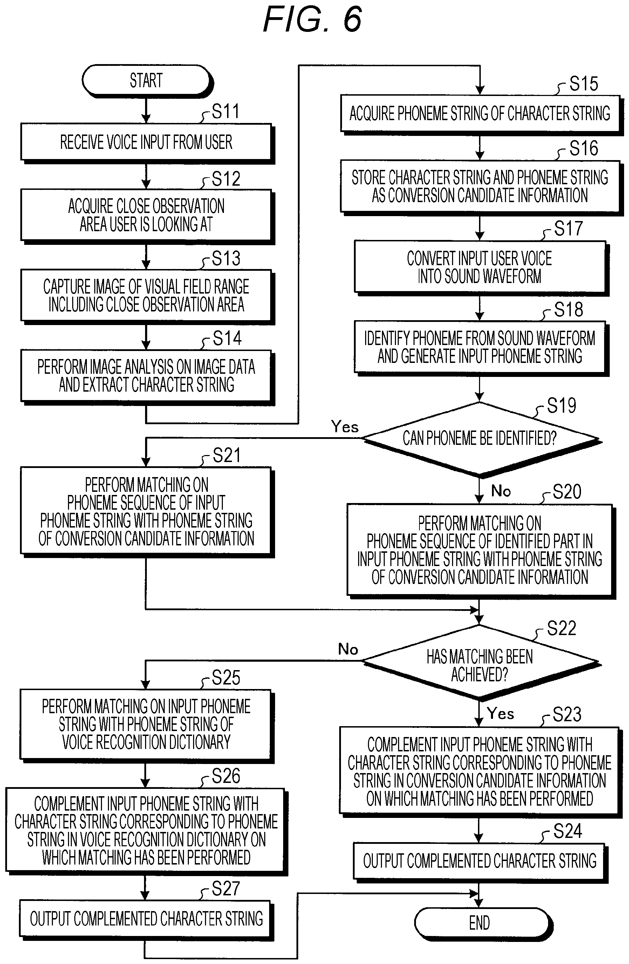

Fig. 6 is a flowchart showing one example of a procedure of an information processing method according to the first embodiment. To begin with, the voice input unit 11 receives voice input from a user (step S11). Then, the line-of-sight detection unit 12 detects a line-of-sight of the user at that time, and acquires a close observation area the user is looking at from the detected line-of-sight (step S12). The image capturing unit 13 captures an image of a visual field range including the acquired close observation area (step S13). Here, "at that time" can be, for example, a period when the voice input unit 11 receives voice input.

The image analysis unit 14 performs image analysis on captured image data corresponding to the visual field range of real space corresponding to the user's visual field, and extracts a character string (step S14). The image analysis unit 14 extracts, for example, a character part in the captured data and converts the extracted data into a character string by OCR technology. Alternatively, the image analysis unit 14 extracts, for example, meta information about a picture in the captured data, and acquires a character string obtained by performing a search in the extracted meta information. Alternatively, the image analysis unit 14 extracts, for example, an image of a certain area in the captured data, and acquires a character string obtained by performing an image search in the extracted image. Then, the image analysis unit 14 acquires a phoneme string of the extracted character string (step S15). Then, the image analysis unit 14 stores a pair of character string and phoneme string as conversion candidate information in the conversion candidate storage unit 15 (step S16).

Thereafter, the voice recognition unit 17 performs voice recognition processing on the user voice input from the voice input unit 11. Specifically, the voice recognition unit 17 converts the input voice into a sound waveform (step S17), identifies phonemes from the sound waveform, and generates an input phoneme string, which is the character string of the first form (step S18). At this time, a part where identification of the phoneme has failed is denoted with a symbol indicating that identification has failed. This produces the input phoneme string that is a sequence of phonemes including phonemes and, in some cases, the symbol indicating that phonemes cannot be identified.

Here, the voice recognition unit 17 determines whether or not the phonemes can be identified from the sound waveform (step S19). In a case where the phonemes cannot be identified (No in step S19), that is, in a case where the input phoneme string includes the symbol indicating that the phonemes cannot be identified, the voice recognition unit 17 performs matching processing on the phoneme sequence of the identified part in the input phoneme string by using the conversion candidate information of the conversion candidate storage unit 15 (step S20). Specifically, the voice recognition unit 17 matches the phoneme sequence of the identified part of the input phoneme string with the phoneme string of the conversion candidate information, and calculates the degree of similarity.

On the other hand, in a case where the phonemes can be identified (Yes in step S19), that is, in a case where the input phoneme string includes only phonemes, matching is performed on the phoneme sequence of the input phoneme string by using the conversion candidate information of the conversion candidate storage unit 15 (step S21). Specifically, the voice recognition unit 17 matches the sequence of all phonemes of the input phoneme string with the phoneme string of the conversion candidate information, and calculates the degree of similarity.

After step S20 or S21, the voice recognition unit 17 determines whether or not matching has been achieved (step S22). Here, in a case where a phoneme string having the degree of similarity equal to or higher than a predetermined threshold exists, the phoneme string having the highest degree of similarity is selected as a matching candidate. In a case where matching has been achieved (Yes in step S22), the voice recognition unit 17 complements the input phoneme string with the character string corresponding to the matched phoneme string in the conversion candidate information (step S23). For example, an input phoneme string having an unidentified phoneme becomes a character string in which the corresponding part is complemented. Alternatively, an input phoneme string that does not have an unidentified phoneme is complemented with a character string. Then, the voice recognition unit 17 outputs the complemented character string to the output unit 18 (step S24). In a case where the output unit 18 is a display device, for example, the character string is displayed as text data in a text box on the display screen. Alternatively, in a case where the output unit 18 is a speaker, the character string is output as voice. The processing is finished as described above.

In a case where matching has not been achieved in step S22 (No in step S22), the voice recognition unit 17 matches the phoneme sequence of the input phoneme string by using the voice recognition dictionary (step S25). Thereafter, the voice recognition unit 17 complements the phoneme sequence of the input phoneme string with the character string corresponding to the phoneme string with the highest degree of similarity in the voice recognition dictionary as a result of the matching (step S26). Then, the voice recognition unit 17 outputs the complemented character string to the output unit 18 (step S27). The processing is finished as described above.

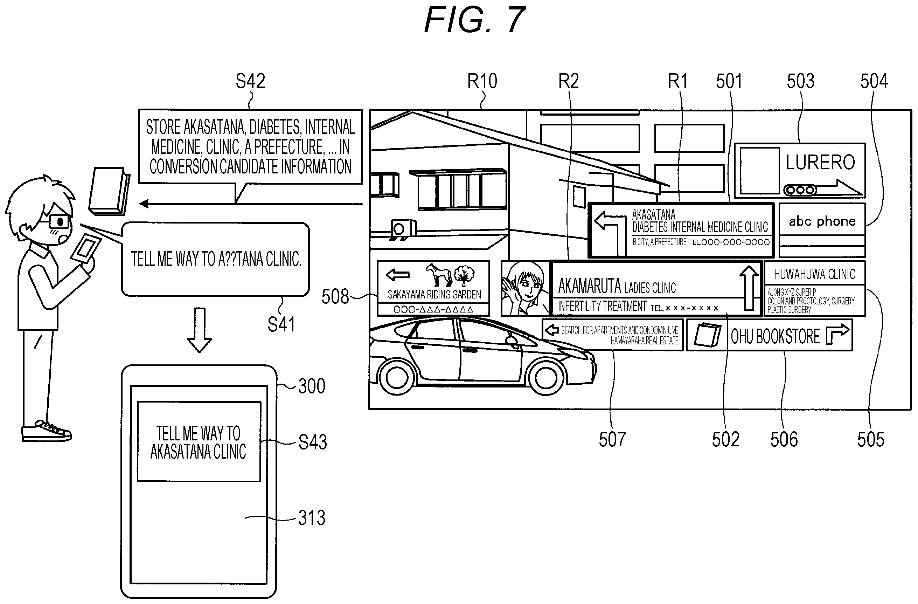

Next, a specific example of the information processing method according to the first embodiment will be described. Fig. 7 is a diagram schematically showing one example of the information processing method according to the first embodiment. Here, an example is taken in which a user looks at a signboard of a clinic in the city and searches for a route to the clinic. The user points the line-of-sight, for example, at a purple signboard 501 "Akasatana Clinic." On this signboard, the clinical department (diabetes, internal medicine), location (B city, A prefecture), and telephone number (ooo-ooo-ooo) are described. It is assumed that the user makes voice input saying "Tell me the way to the Akasatana Clinic" from the voice input unit 11 while pointing the line-of-sight at this signboard (S41).

When the voice input unit 11 receives the voice input, the line-of-sight detection unit 12 detects the line-of-sight position of the user while the voice input unit 11 receives the voice input, and identifies a close observation area R1, which is the line-of-sight position. Here, it is assumed that the line-of-sight detection unit 12 identifies the close observation area R1 of Fig. 7. Thereafter, the image capturing unit 13 captures an image of a visual field region R10 including the close observation area R1.

The image analysis unit 14 extracts the close observation area R1 detected by the line-of-sight detection unit 12 from the captured image data. Thereafter, the image analysis unit 14 converts character strings in the close observation area R1 into text data by OCR technology. This causes each of the clinic name "Akasatana Clinic", the clinical department "diabetes", "internal medicine", the location "B city, A prefecture", and the telephone number "ooo-ooo-ooo" to be converted into text data. Furthermore, a phoneme string of the text data is generated. Then, the image analysis unit 14 stores the conversion candidate information that is a pair of text data and the phoneme string in the conversion candidate storage unit 15 (S42).

Furthermore, the image analysis unit 14 acquires text data of coloring information on the signboard in the extracted visual field region by performing a search. In this case, since the coloring information is "purple", a search for "purple signboard" is performed using the Internet, and text data obtained as a result of the search is acquired. At this time, in a case where the search for "purple signboard" is performed, information such as a location acquired as text data may be used. Furthermore, the image analysis unit 14 may perform an image search using image data of the signboard. Moreover, the image analysis unit 14 may perform a search by combining "diabetes", "internal medicine", "B city, A prefecture", and "ooo-ooo-oooo" acquired as text data as a keyword, and acquire the text data obtained as a result of the search. The acquired text data is stored in the conversion candidate storage unit 15. By the processing described above by the image analysis unit 14, the text data such as "akasatana", "diabetes", "internal medicine", and "B city, A prefecture" are stored in the conversion candidate storage unit 15 together with the phoneme string.

Thereafter, the voice recognition unit 17 converts the voice from the voice input unit 11 into a voice waveform, identifies the phonemes from the voice waveform, and generates the input phoneme string. The voice recognition unit 17 matches the input phoneme string with the phoneme string in the conversion candidate information, and calculates the degree of similarity. The voice recognition unit 17 acquires a recognition candidate having the degree of similarity equal to or higher than a threshold and the highest degree of similarity, and uses this recognition candidate to complement the character string that undergoes voice recognition. On the other hand, in a case where there is no recognition candidate having the degree of similarity equal to or higher than a threshold in the conversion candidate information, voice recognition using the voice recognition dictionary is performed.

Here, for example, consider a case where, when the user is uttering "Tell me the way to the Akasatana Clinic", some sound cannot be recognized like "Tell me the way to the A??tana Clinic" due to noise in the city and the like. In this case, for "akasatana", the input phoneme string generated by the voice recognition unit 17 becomes "a-?-?-?-?-t-a-n-a." Since the phoneme of a defective part of "?" in this input phoneme string cannot be identified, the matching processing of step S20 of Fig. 6 is performed. That is, the identified part of the phoneme string in the input phoneme string is compared with the phoneme string in the conversion candidate information, and the phoneme string with the degree of similarity equal to or higher than a threshold and the highest degree of similarity is acquired. In this example, it is assumed that matching can be done like "a-k-a-s-a-t-a-n-a" corresponding to "akasatana" in the conversion candidate information. Note that here, the "defective part" means that a phoneme should exist at that location, but the phoneme cannot be identified.

With this operation, the input phoneme string "a-?-?-?-?-t-a-n-a" (character string of the first form) is complemented into the character string of the second form "akasatana" corresponding to "a-k-a-s-a-t-a-n-a." That is, the "?" part is complemented. That is, in a case where the user utters "Tell me the way to the Akasatana Clinic" but voice recognition of some voice fails like "Tell me the way to the A??tana Clinic" due to noise in the city and the like, it is possible to complement the unrecognized part to obtain the accurate character string. As a result, the accuracy of voice recognition can be improved.

Meanwhile, in a case where the information processing device 10 of the first embodiment is not used, the processing of steps S12 to S16 and S19 to S24 of Fig. 6 does not exist. That is, after the input phoneme string is generated, the input phoneme string is matched with the phoneme string of the voice recognition dictionary. Therefore, as described above, in a case where some phoneme cannot be identified, even if matching is performed with a word in the voice recognition dictionary, the unrecognized phoneme part cannot be complemented. As a result, as in the first embodiment, the character string desired by the user cannot be acquired.

Next, for example, consider a case where all the phonemes of the user's utterance "Tell me the way to the Akasatana Clinic" can be identified. In this case, as in the processing in step S21 of Fig. 6, about the sequence of input phoneme strings of "akasatana", a corresponding phoneme string exists in the conversion candidate information and is matched. As a result, the sequence of input phoneme string is complemented with the character string corresponding to the matched phoneme string in the conversion candidate information. In this way, by using the character string extracted from information such as the signboard in the user's close observation area R1 as the conversion candidate information, it is possible to improve the accuracy of voice recognition in a case where a proper noun existing in a certain region is included in the user's voice.

Meanwhile, in a case where the information processing device 10 of the first embodiment is not used, as described above, the processing of steps S12 to S16 and S19 to S24 of Fig. 6 does not exist. Therefore, in a case where the proper noun is not registered in the voice recognition dictionary, even if voice recognition can be performed, the part that is originally in katakana notation "Akasata Clinic" will be in hiragana notation, and it is not possible to accurately reproduce the word desired by the user.

Furthermore, consider a case where, for example, the user utters "Tell me the way to the Akasatana clinic", and some sound undergoes wrong voice recognition as "Tell me the way to Asahatana Clinic" due to noise in the city and the like. In this case, if the degree of similarity is high between the input phoneme string of "asahatana" and the phoneme string of "akasatana" in the conversion candidate information, it is possible to correct information that undergoes wrong voice recognition in the input phoneme string into the character string of correct contents uttered by the user.

Moreover, for example, when the user starts utterance "akasa", if the degree of similarity is high between the phoneme string of "akasa" and the phoneme string of "akasatana" in the conversion candidate information, it is possible to complement the part unuttered after "akasa" and output the character string with contents to be predicted to be uttered by the user as "akasatana."

The result of voice recognition performed in this way is displayed, for example, on a display device 313 of the smartphone 300 (S43) .

Note that the description described above shows the case where the image capturing unit 13 is provided in the information processing device 10, but the image capturing device does not necessarily have to be provided in the information processing device 10. For example, a sensor (camera) provided in a surrounding environment by the outside-in method can be used as the image capturing unit 13.

Furthermore, in the description described above, during the period of voice input by the user, the conversion candidate information including the character string and the phoneme string acquired by the image analysis processing is transitorily stored in the conversion candidate storage unit 15, and after the voice input is finished, the conversion candidate information is deleted. However, before the conversion candidate information is deleted, the conversion candidate information may be registered in the voice recognition dictionary in the voice recognition dictionary storage unit 16. Furthermore, instead of registering all the conversion candidate information stored in the conversion candidate storage unit 15 in the voice recognition dictionary, some conversion candidate information may be registered in the voice recognition dictionary. As some conversion candidate information, for example, information with the character string being a proper noun can be illustrated. Since there is a high possibility that proper nouns are not registered as dictionary data, voice recognition is difficult. However, by registering the conversion candidate information in the voice recognition dictionary, even in a case where the user utters a character string such as a proper noun, the voice recognition rate in the subsequent matching processing can be increased.

As described above, in the first embodiment, when voice recognition is performed on the voice uttered by the user, voice recognition is performed using the character string acquired from information included in the user's close observation area as the conversion candidate information. At this time, matching processing is performed on the input phoneme string of the user's voice generated during voice recognition by using the conversion candidate information. Therefore, for example, in a case where the user performs a search by looking at surrounding objects, it is possible to improve the voice recognition accuracy of the character string regarding surrounding objects included in the voice.

Furthermore, by using the phoneme string of the conversion candidate information, matching processing is performed on all the phonemes whose phonemes can be identified in the input phoneme string. With this operation, even in a case where the input phoneme string includes phonemes that are not identified during voice recognition, it is possible to output the character string with the unidentified part complemented.

### [Modification (1) of first embodiment]

The first embodiment has shown the case of extracting the character string by using information included in the user's close observation area detected by the line-of-sight detection unit 12 in the captured image data. However, priority may be set for each character string in the conversion information. The priority can be used, for example, as a criterion for determining which to select in a case where character strings having the same degree of similarity exist as a result of matching processing by the voice recognition unit 17.

In this case, the priority can be the length of user's close observation time. That is, text data obtained from information in the close observation area that has been hit by the line-of-sight for a longer time has higher priority. In this case, not only the close observation area but also time when the close observation area is hit by the line-of-sight is recorded in the line-of-sight detection unit 12.

For example, in Fig. 7, it is assumed that time when the close observation area R1 is hit by the line-of-sight is t1 seconds, and that time when the close observation area R2 is hit by the line-of-sight is t2 seconds (t1 > t2). Furthermore, as a result of the matching processing, it is assumed that the character string "akasatana" obtained from the signboard 501 in the close observation area R1 and the character string "akamaruta" obtained from a signboard B in the close observation area R2 have the same degree of similarity. In this case, since the close observation area R1 has been hit by the line-of-sight for a longer time, the voice recognition unit 17 selects "akasatana."

In this way, by giving priority to each character string in change information, in a case where there are many character strings in the change information, the probability of selecting the character string desired by the user can be increased. In particular, the accuracy of voice recognition can be increased by setting the priority on the basis of the time when hit by the user's line-of-sight.

### [Modification (2) of first embodiment]

In the first embodiment, the case where the line-of-sight detection unit 12 detects the user's line-of-sight is taken as an example. However, the information processing device 10 does not have to include the line-of-sight detection unit 12.

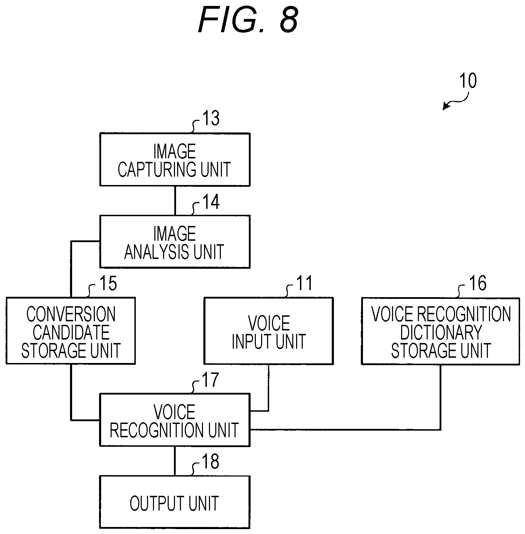

Fig. 8 is a block diagram showing one example of a functional configuration of an information processing device according to a modification (2) of the first embodiment. In the modification (2) of the first embodiment, the line-of-sight detection unit 12 is omitted. In general, the direction of the human visual field substantially agrees with the orientation of the face. Therefore, in a case where a user wears a head mount display, the orientation of the head mount display (orientation of face) can be regarded as the direction of the line-of-sight (close observation point).

Therefore, the image capturing unit 13 may use the area centered on the orientation of the head mount display at the time of voice input as the close observation area, and capture the visual field range including the close observation area.

In a case where the line-of-sight detection unit 12 is not provided, the user's close observation area is unknown. Therefore, by assuming the user's close observation area near the center of image data, the image analysis unit 14 may extract a character string from the area near the center of the captured image data. Alternatively, the image analysis unit 14 may extract a character string from the entire area of the captured image data. For example, in the case of the example of Fig. 7, character strings are extracted not only from the signboard 501 of "Akasatana Diabetes Internal Medicine Clinic" but also from other signboards 502 to 508.

In this way, the orientation of the head mount display is set as the line-of-sight direction. The area centered on the orientation of the head mount display during voice input by the user is captured, and image analysis processing is performed using the captured image data to extract a character string. This character string is used to complement the input phoneme string that has undergone voice recognition by the voice recognition unit 17. With this configuration, even if the line-of-sight detection unit 12 for detecting the user's line-of-sight is not provided, the rough direction of the user's line-of-sight can be identified. Furthermore, even if the user's line-of-sight direction is different, there is a high probability that the user's line-of-sight direction will exist in the captured image data. Therefore, the accuracy of voice recognition can be improved by extracting character strings from the entire area of image data.

### [Modification (3) of first embodiment]

The first embodiment shows a case where the voice recognition dictionary storage unit 16 is provided in the information processing device 10, but may exist in a server on a cloud. In this case as well, the conversion candidate information stored in the conversion candidate storage unit 15 may be stored in the server on the cloud. Furthermore, in a case where the conversion candidate information is transmitted to the server on the cloud, usage status information indicating the usage status such as the current location and time zone of the user may be added and transmitted. For example, conversion candidate information having usage status information close to the user's current location and time zone may be acquired and used for a search as meta information.

### (Second embodiment)

### [Configuration of information processing device according to second embodiment]

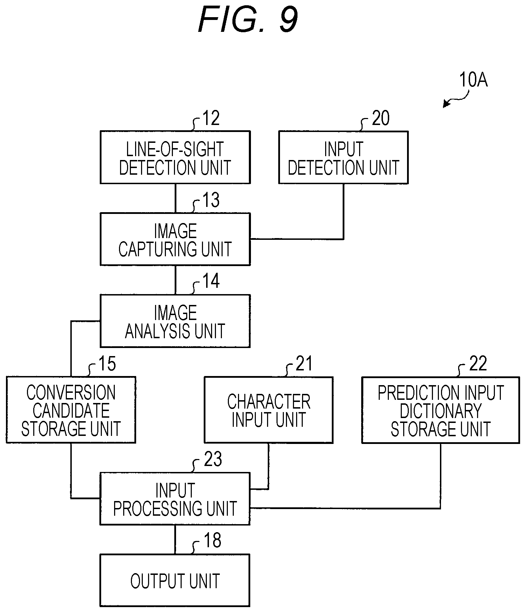

Fig. 9 is a block diagram schematically showing one example of a functional configuration of an information processing device according to a second embodiment. An information processing device 10A includes an input detection unit 20, a character input unit 21, a line-of-sight detection unit 12, an image capturing unit 13, an image analysis unit 14, a conversion candidate storage unit 15, a prediction input dictionary storage unit 22, an input processing unit 23, and an output unit 18. Parts different from the first embodiment will be described below.

The input detection unit 20 detects a start operation of character input by a user. Detection of the start operation of character input may be, for example, a case where a character input screen such as a search screen is displayed in an operation of the information processing device 10A. Furthermore, the detection of the start operation of character input may be detection of whether or not the character input operation into the information processing device 10A is likely to occur by machine learning and the like. For example, the input detection unit 20 is an inertial measurement unit (hereinafter referred to as IMU), and can detect the character input operation by the user by applying an IMU output during operation such as taking out the information processing device 10A from a pocket to DNN.

The character input unit 21 is an interface that performs character input into the information processing device 10A by the user. An input character string, which is input information input via the character input unit 21, is passed to the input processing unit 23. The character input unit 21 is, for example, a keyboard, a button, a touch panel, and the like. The input character string corresponds to a character string of a first form. The input character string is a character string including a sequence of at least one type of character selected from hiragana, number, and alphabet.

When the input detection unit 20 detects the start operation of character input by the user, the image capturing unit 13 captures an image of a visual field range including a close observation area, which is a line-of-sight position of the user at character input time when character input is performed. The character input time is preferably a time immediately before the user performs character input. This is because the character string that exists in an area the user is looking at immediately before performing character input may be used as the input character string. However, it is difficult to detect the time immediately before the user performs character input and capture the visual field range including the close observation area. Furthermore, in a case where the user is performing character input from the character input unit 21, the user is looking at the information processing device 10A. Therefore, in the second embodiment, it is assumed that the period from the detection of the start operation of character input to the end of character input is the time when the character input is performed. For example, in a case where the user performs a search by looking at information described on an object such as a signboard, after looking at the information described on the object, the character input processing is performed after the start operation of character input is performed with the information processing device 10A. In this case, the time from the range immediately before the time when the information processing device 10A prepares for the search to the end of the character input processing is the time when the character input is performed.

At this time, in a case where the information described on the object cannot be remembered at once, the information may be looked at again for confirmation. Therefore, at timing when the user's line-of-sight position detected by the line-of-sight detection unit 12 is switched from the information processing device 10A to the object, the user's visual field range including the close observation area can be captured.

The image analysis unit 14 analyzes image data captured by the image capturing unit 13 and extracts the character string. Furthermore, the image analysis unit 14 acquires the way of reading the extracted character string, and stores the extracted character string and the way of reading in the conversion candidate storage unit 15 as conversion candidate information. The way of reading is, for example, a character string including a sequence of at least one type of character selected from hiragana, number, and alphabet. Note that details of the image analysis unit 14 are similar to the first embodiment, and thus descriptions thereof will be omitted.

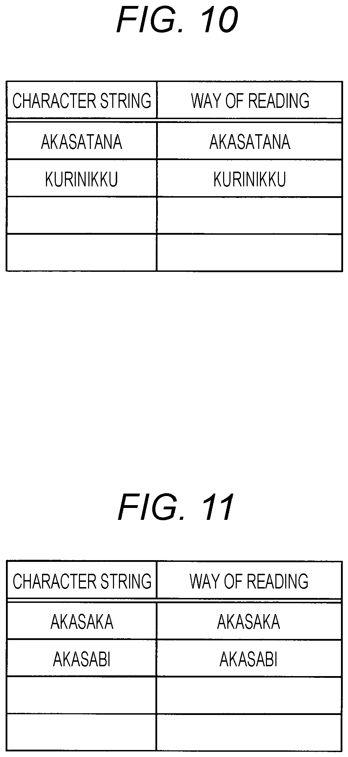

The conversion candidate storage unit 15 transitorily stores the conversion candidate information acquired by the image analysis unit 14. Fig. 10 is a diagram showing one example of the conversion candidate information. The conversion candidate information is information in which the character string and the way of reading are associated with each other as described above. Here, hiragana is used as the way of reading for ease of description, but alphabet, number, and the like may be used instead of hiragana. The conversion candidate information is used at the time of prediction input by the input processing unit 23. The conversion candidate information in the conversion candidate storage unit 15 is deleted, for example, when the character input by the user is finished.

The prediction input dictionary storage unit 22 stores a prediction input dictionary. Fig. 11 is a diagram showing one example of the prediction input dictionary. As shown in Fig. 11, the prediction input dictionary is information in which the character string of a general word and the way of reading are associated with each other. Again, hiragana is used as the way of reading for ease of description, but alphabet, number, and the like may be used instead of hiragana. The prediction input dictionary is used for prediction input by the input processing unit 23. The prediction input dictionary storage unit 22 corresponds to a dictionary information storage unit.

The input processing unit 23 displays, on the output unit 18, a character string of a prediction input candidate based on the input character string input by the user from the character input unit 21. In a case where the prediction input candidate is selected by the user from the character input unit 21, the input character string is complemented with the character string of the prediction input candidate. The character string of the prediction input candidate is mixed text data in which the input character string is in a form including hiragana, katakana, kanji, number, alphabet, and the like. The input processing unit 23 corresponds to a recognition unit and a complement unit.

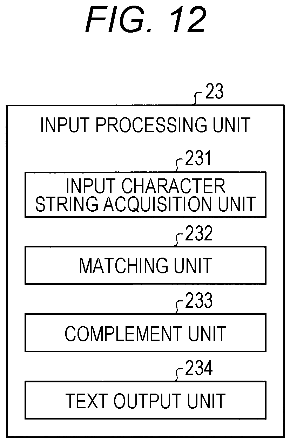

Fig. 12 is a block diagram schematically showing one example of a functional configuration of the input processing unit. The input processing unit 23 includes an input character string acquisition unit 231, a matching unit 232, a complement unit 233, and a text output unit 234.

The input character string acquisition unit 231 acquires the input character string input by the character input unit 21. The input character string acquisition unit 231 corresponds to a recognition unit. The matching unit 232 matches the acquired input character string with the way of reading in the conversion candidate information or the prediction input dictionary, and acquires the character string corresponding to the way of reading with the highest degree of similarity among the way of reading with the degree of similarity equal to or higher than a threshold. For example, the matching unit 232 may also perform matching processing using the first half character string including the first character string of the input character string, and acquire the character string corresponding to the character string with the highest degree of similarity. That is, even if all the character strings of the way of reading that constitute the word that the user intends to input are not input, matching processing can be performed using a certain number of character strings including the first character string. Here, the matching unit 232 preferentially applies the conversion candidate information when performing matching. Then, in a case where there is no matching in the conversion candidate information, the prediction input dictionary is applied to perform matching. Furthermore, the degree of similarity can be, for example, a proportion of characters that match the way of reading in the conversion candidate information or the voice recognition dictionary to the characters included in the acquired input character string.

The complement unit 233 complements the input character string with the extracted character string on the basis of a result of matching processing by matching. The complement unit 233 complements the input character string with the character string having the degree of similarity equal to or higher than a threshold and the highest degree of similarity. The complemented character string corresponds to a character string of a second form. The image analysis unit 14, the matching unit 232, and the complement unit 233 correspond to a complement unit.

The text output unit 234 outputs the character string complemented by the complement unit 233 to the output unit 18. For example, in a case where the output unit 18 is a display device, the text output unit 234 outputs the complemented character string to the display device as a conversion candidate.

Returning to Fig. 9, the output unit 18 outputs the character string from the input processing unit 23. For example, the output unit 18 is a display device, and displays the character string that is the complemented character string in an input field or a conversion candidate list of the search screen displayed on the display device. Alternatively, the output unit 18 is a voice output device, and outputs the complemented character string by voice feedback.

### [Information processing procedure according to second embodiment]

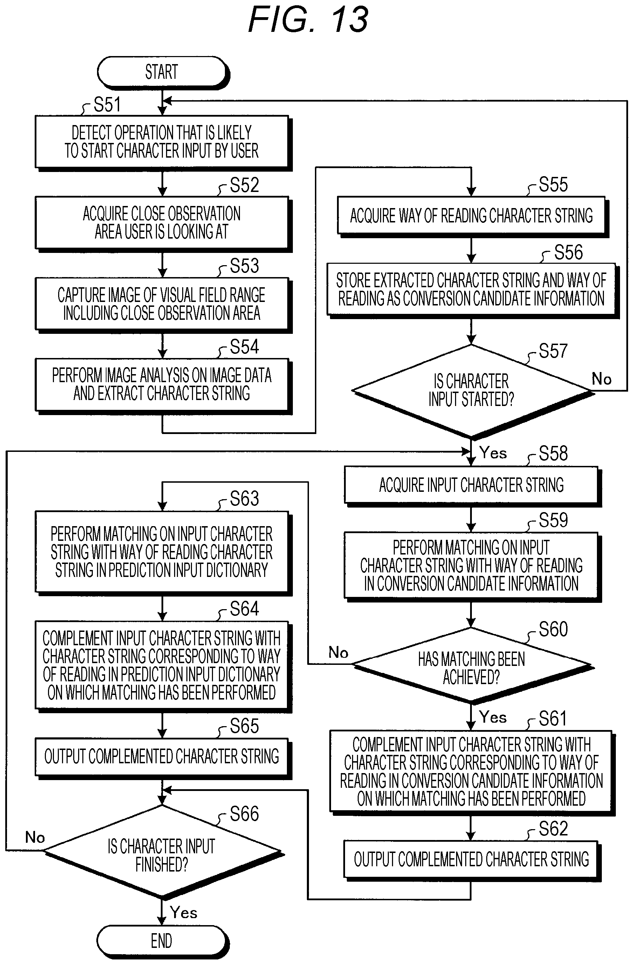

Fig. 13 is a flowchart showing one example of a procedure of an information processing method according to the second embodiment. To begin with, when the input detection unit 20 detects an operation that is likely to start character input by the user (step S51), the line-of-sight detection unit 12 detects the line-of-sight of the user at that time, and acquires a close observation area the user is looking at from the detected line-of-sight (step S52). The operation that is likely to start character input is detected, for example, by displaying the search screen by the information processing device 10A or by setting the display screen in a state of performing a search. Furthermore, it is possible to detect whether or not character input is likely to be performed by IMU output when the user handles the information processing device 10A. Furthermore, here, "at that time" is defined as, for example, a range from detection of the operation that is likely to start character input to completion of the character input.

Then, in a similar manner to steps S13 to S14 of Fig. 6 of the first embodiment, the image capturing unit 13 captures the visual field range including the acquired close observation area, and the image analysis unit 14 performs image analysis on image data and extracts the character string (steps S53 to S54). However, the image capturing unit 13 does not capture an image in a case where the user is looking at the information processing device 10A, but captures an image in a case where the user looks at a portion near the acquired close observation area. Thereafter, the image analysis unit 14 acquires the way of reading the extracted character string (step S55). Then, the image analysis unit 14 stores a pair of character string and the way of reading as recognition candidate information in the conversion candidate storage unit 15 (step S56).

Thereafter, it is determined whether or not character input by the user is started (step S57). That is, it is determined whether or not character input from the character input unit 21 is performed. In a case where character input is not started (No in step S57), the process returns to step S51.

In a case where character input is started (Yes in step S57), the input processing unit 23 acquires the input character string input by the character input unit 21 (step S58). Then, the input processing unit 23 performs matching processing on the acquired input character string by using the way of reading in the conversion candidate information of the conversion candidate storage unit 15 (step S59). At this time, the input processing unit 23 calculates the degree of similarity of each way of reading in the conversion candidate information on which matching has been performed to the input character string.

Thereafter, the input processing unit 23 determines whether or not matching has been achieved (step S60). Here, in a case where the way of reading having the degree of similarity equal to or higher than a predetermined threshold exists, the way of reading having the highest degree of similarity is selected as a matching candidate. In a case where matching has been achieved (Yes in step S60), the input processing unit 23 complements the input character string with the character string corresponding to the way of reading in the conversion candidate information on which matching has been performed (step S61). Then, the input processing unit 23 outputs the complemented character string to the output unit 18 (step S62). In a case where the output unit 18 is a display device, for example, the character string is displayed as a conversion candidate in a text box in the display screen.

On the other hand, in a case where matching has not been achieved (No in step S60), the input processing unit 23 performs matching processing on the input character string by using the way of reading in the prediction input dictionary (step S63). Thereafter, the input processing unit 23 complements the input character string with the character string corresponding to the way of reading in the prediction input dictionary with the highest degree of similarity as a result of the matching (step S64). Then, the input processing unit 23 outputs the complemented character string to the output unit 18 (step S65) .

After step S62 or S65, it is determined whether or not character input is finished (step S66). In a case where character input is not finished (No in step S66), the process returns to step S58, and the processing described above is repeatedly performed. At this time, in step S58, the input character string from the time when the character input is started is acquired. On the other hand, in a case where character input is finished (Yes in step S66), the process is finished.

In this way, in the second embodiment, after character input is started, every time it is detected that a new character is input, the processing of steps S58 to S65 is repeatedly performed. That is, matching processing is performed in order from the character corresponding to the first way of reading the character string the user intends to input. Then, from among the candidates matched with the first input character (way of reading), the conversion candidate is further narrowed with the next input character (way of reading). With this operation, the second half of the character string the user intends to input can be complemented with the corresponding part in the character string corresponding to the way of reading in the conversion candidate information on which matching is performed.

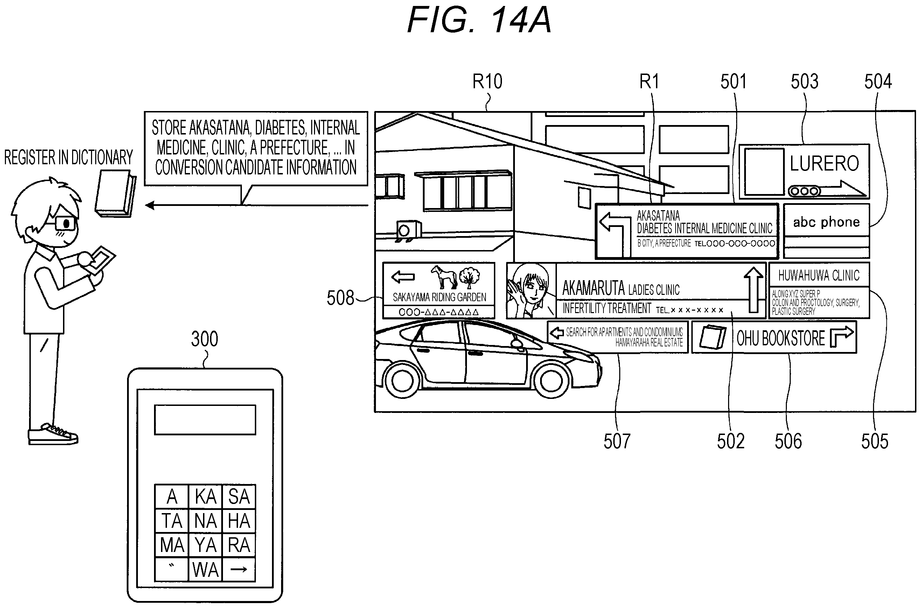

Next, a specific example of the information processing method according to the second embodiment will be described. Figs. 14A to 14C are diagrams schematically showing one example of the information processing method according to the second embodiment. Again, in a similar manner to the case of Fig. 7 of the first embodiment, an example is taken in which a user looks at a signboard of a clinic in the city and searches for a route to the clinic. The user points the line-of-sight, for example, at a purple signboard 501 "Akasatana Clinic." On this signboard 501, the clinical department (diabetes, internal medicine), location (B city, A prefecture), and telephone number (ooo-ooo-oooo) are described.

As shown in Fig. 14A, the user takes out the information processing device 10A and prepares for search input while pointing the line-of-sight at the signboard 501. Then, the input detection unit 20 detects the start operation of character input by the user. When the input detection unit 20 detects the start operation of character input, the line-of-sight detection unit 12 detects the user's line-of-sight, and the image capturing unit 13 captures a visual field range R10 including a close observation area R1 pointed by the user's line-of-sight. At this time, in a case where the user's line-of-sight position is at the information processing device 10A by the line-of-sight detection unit 12, image capturing by the image capturing unit 13 is not performed. In a case where the user's line-of-sight comes near the position detected by the line-of-sight detection unit 12 in surrounding scenery by the line-of-sight detection unit 12, or in a case where the user's line-of-sight stays longer than a predetermined time, the visual field range R10 is captured at predetermined timing. For example, after preparing for performing search input by the information processing device 10A, again, the line-of-sight may be stopped for a few seconds at the position where the character to be input is written, and then character input to the information processing device 10A may be performed. Alternatively, in the middle of character input, again, the line-of-sight may be stopped for a few seconds at the position where the character to be input is written, and then character input to the information processing device 10A may be performed. In such a case, the image capturing unit 13 captures the user's visual field range R10 at timing when the line-of-sight is stopped again at the position where the characters are written. Note that a method of identifying the close observation area is similar to the case of the first embodiment.

Thereafter, by using the captured image data, image analysis by the image analysis unit 14 is performed, which is similar to the image analysis described in the first embodiment. However, the image analysis unit 14 generates the way of reading the acquired character string, and stores conversion candidate information that is a pair of the character string and the way of reading in the conversion candidate storage unit 15.

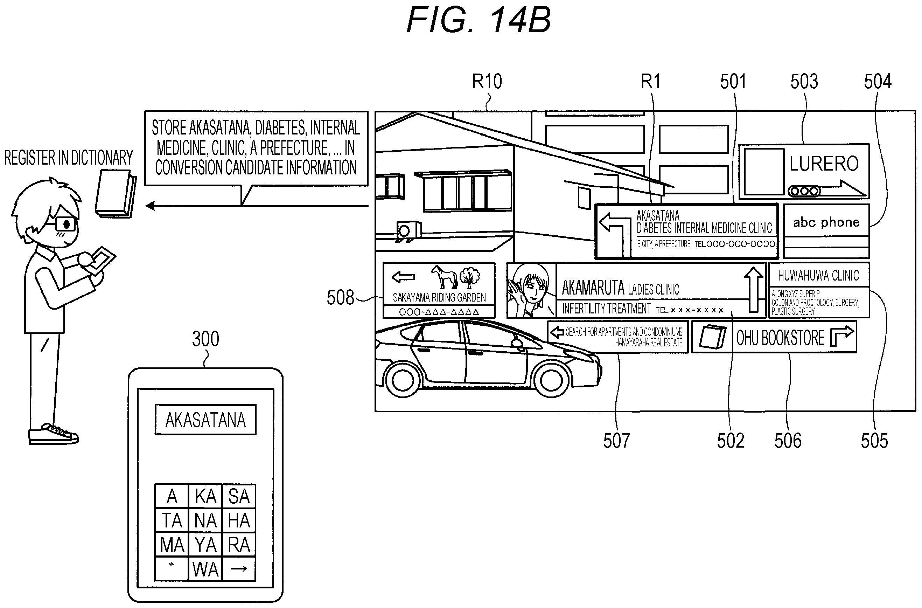

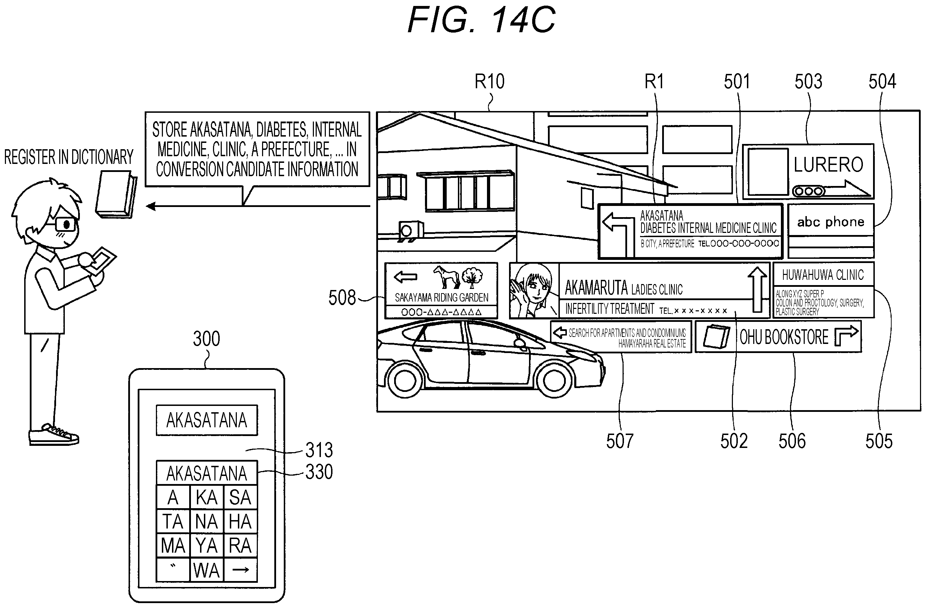

Then, as shown in Fig. 14B, it is assumed that character input by the user is started from the character input unit 21 and "akasatana" is input. The input processing unit 23 acquires the input character string "akasatana", and first performs matching processing on the input character string with the way of reading in the conversion candidate information. As a result, the degree of similarity with the reading of "akasatana" is the highest, and thus the input processing unit 23 acquires "akasatana" as a conversion candidate. Then, as shown in Fig. 14C, "akasatana" is displayed on a display device 313 as a conversion candidate 330. In this way, by registering the character string acquired from information included in the user's close observation area in the conversion candidate information, this can be listed as a conversion candidate for the input character string. As a result, the accuracy of character conversion can be improved for the user.

Meanwhile, in a case where the information processing device 10A of the second embodiment is not used, the processing of steps S51 to S56 and S59 to S62 of Fig. 13 does not exist. That is, after acquiring the input character string, matching processing is performed on the input character string by using the way of reading in the prediction input dictionary. As a result, in a case where "akasatana" in katakana notation is not registered, "akasatana" in hiragana notation will be displayed as a conversion candidate. In this case, the user needs to further perform an operation of changing the input character string of "akasatana" into katakana notation. In this way, as in the first embodiment, the word desired by the user cannot be acquired.

In this way, in the second embodiment, when the start operation of character input by the user is detected, the user's close observation area at that time is captured, and the character string is extracted from this image data. Then, matching processing is performed on the input character string by using the way of reading the extracted character string, and the character string with the highest degree of similarity is displayed as the conversion candidate. As a result, it becomes possible to convert the input character string input by the user who thinks about a search when looking at the surrounding situation into the character string of the form desired by the user. Furthermore, the accuracy of character conversion can be improved.

Furthermore, even in a state where input of the input character string by the user is not completed, in a case where there is a character string that matches the input character string input up to then, this is displayed as a conversion candidate. That is, it is possible to complement contents the user has intended to input and convert the contents into a character string having the form desired by the user. This saves labor of character input by the user. In particular, it is quite difficult to display a desired conversion candidate for a proper noun, but according to the second embodiment, a proper noun included in the user's close observation area can be displayed as a conversion candidate. This is similar in a case where the user erroneously inputs some character in the input character string. That is, the erroneously input character can be converted into the character string desired by the user.

### [Modification (1) of second embodiment]

In the second embodiment, when the start operation of character input by the user is detected, in a case where a portion near the position detected by the line-of-sight detection unit 12 is looked at, or, in a case where a place other than the information processing device 10A is closely observed for a predetermined time or more, the place is captured. However, the embodiment is not limited to this example.

For example, in a case where it is detected by the line-of-sight detection unit 12 that the same area has been looked at for a certain time, the visual field range including the area may be captured in preparation for a case where input by the user occurs.

Furthermore, for example, the image capturing unit 13 may capture the user's visual field range at all times and store image data by a FIFO method in a buffer having a predetermined capacity. In this case, when the input detection unit 20 detects the start operation of character input, the image analysis unit 14 may perform image analysis using the image data saved immediately before the detection time.

In this way, in a case where the user's line-of-sight position is looking at the same area for a certain time, or by capturing the user's visual field range at all times, the character string can be extracted from the image of the area the user has been looking at immediately before performing the character input to the information processing device 10A. As a result, the input character string that is input can be complemented into the character string desired by the user.

Furthermore, contents described in the modification of the first embodiment can be applied to the second embodiment.

### [Hardware configuration]

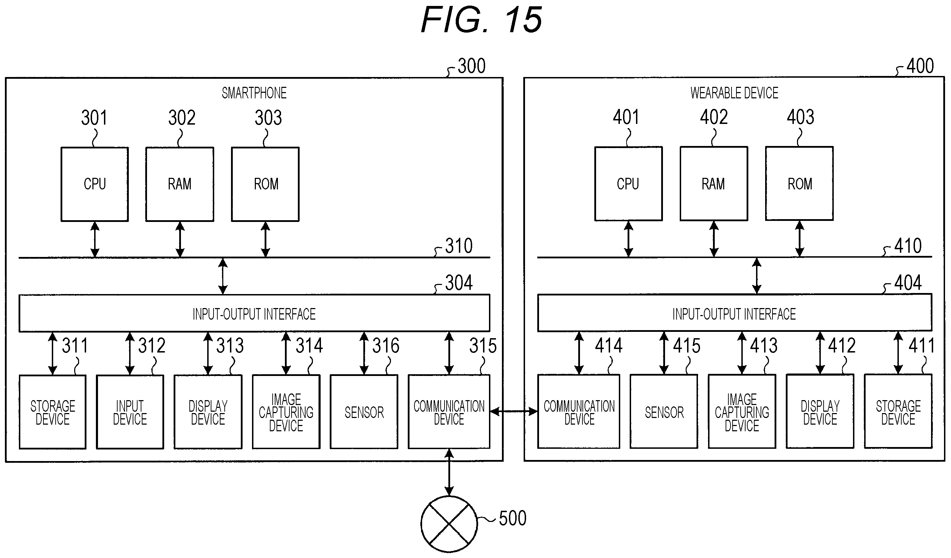

Fig. 15 is a block diagram showing one example of a hardware configuration of the information processing device. Here, as shown in Fig. 5, a case where the information processing device 10 includes a smartphone 300 and a wearable device 400 is shown.

The wearable device 400 includes a central processing unit (CPU) 401, a random access memory (RAM) 402, a read only memory (ROM) 403, and an input-output interface 404. Each unit of the wearable device 400 is connected by a bus 410.

The CPU 401 operates on the basis of a program stored in the ROM 403 or a storage device 411, and controls each unit. For example, the CPU 401 develops the program stored in the ROM 403 or the storage device 411 into the RAM 402, and executes processing corresponding to various programs.

The RAM 402 stores the program to be executed by the CPU 401, or transitorily stores data acquired by the execution of various programs by the CPU 401.

The ROM 403 stores a boot program such as a basic input output system (BIOS) executed by the CPU 401 when the wearable device 400 is started, and the program and the like that depends on the hardware of the wearable device 400.

The input-output interface 404 is an interface for connecting an input-output device and the wearable device 400. For example, the CPU 401 is connected to the storage device 411, a display device 412, an image capturing device 413, a communication device 414, and a sensor 415 via the input-output interface 404.

The storage device 411 is a computer-readable recording medium that non-transitorily records the program to be executed by the CPU 401, data to be used by the program, and the like. Specifically, the storage device 411 is a recording medium that records an information processing program according to the present disclosure, which is one example of program data. The storage device 411 is, for example, a hard disk drive (HDD) or a solid state drive (SSD).

The display device 412 displays a display image. The display device 412 can be a transmissive display (see-through display).

The image capturing device 413 is, for example, a device that captures real space by using an image capturing element such as a charge coupled device (CCD) or a complementary metal oxide semiconductor (CMOS), and various members such as a lens for controlling image formation of a subject image on the image capturing element to generate a captured image. The image capturing device 413 may capture a still image or may capture a moving image.

The communication device 414 communicates with a communication device 315 of the smartphone 300 by various communication standards such as universal serial bus (USB), Bluetooth (registered trademark), and Wi-Fi (registered trademark).

The sensor 415 is, for example, a line-of-sight detection sensor that detects the user's line-of-sight position.

The smartphone 300 includes a CPU 301, a RAM 302, a ROM 303, and an input-output interface 304. Each unit of the smartphone 300 is connected by a bus 310.

The CPU 301 operates on the basis of a program stored in the ROM 303 or a storage device 311, and controls each unit. For example, the CPU 301 develops the program stored in the ROM 303 or the storage device 311 into the RAM 302, and executes processing corresponding to various programs.

The RAM 302 stores the program to be executed by the CPU 301, or transitorily stores data acquired by the execution of various programs by the CPU 301. Some area of the RAM302 is used as the conversion candidate storage unit 15.

The ROM 303 stores a boot program such as a basic input output system (BIOS) executed by the CPU 301 when the smartphone 300 is started, and the program and the like that depends on the hardware of the smartphone 300.

The input-output interface 304 is an interface for connecting an input-output device to the smartphone 300. For example, the CPU 301 is connected to the storage device 311, an input device 312, the display device 313, an image capturing device 314, the communication device 315, and a sensor 316 via the input-output interface 304.

The storage device 311 is a computer-readable recording medium that non-transitorily records the program to be executed by the CPU 401, data to be used by the program, and the like. Specifically, the storage device 311 is a recording medium that records an information processing program according to the present disclosure, which is one example of program data. The storage device 311 is, for example, an HDD or SSD.

The input device 312 is, for example, a device operated by the user, such as a touch panel. The input device 312 may include buttons, switches, levers, and the like. Furthermore, the input device 312 includes a microphone that detects the user's voice.

The display device 313 displays a display image. The display device 313 can be a display device such as a liquid crystal display (LCD) or an organic electro-luminescence (EL) display, a sound output device such as a speaker and a headphone, and the like.

The image capturing device 314 is, for example, a device that captures real space by using an image capturing element such as CCD or CMOS, and various members such as a lens for controlling image formation of a subject image on the image capturing element to generate a captured image. The image capturing device 314 may capture a still image or may capture a moving image.

The communication device 315 communicates with the communication device 414 of the wearable device 400 by various communication standards such as USB, Bluetooth (registered trademark), and Wi-Fi (registered trademark).

The sensor 316 is, for example, various sensors such as a distance measuring sensor, an acceleration sensor, a gyro sensor, a geomagnetic sensor, a vibration sensor, an optical sensor, and a sound sensor. The sensor 316 acquires, for example, information regarding the state of the smartphone 300 itself and the like, such as a posture of a housing of the smartphone 300.

For example, the CPU 301 of the smartphone 300 implements functions of the image analysis unit 14 and the voice recognition unit 17 by executing the information processing program loaded on the RAM 302.

Furthermore, the storage device 311 stores the information processing program according to the present disclosure and data in the voice recognition dictionary storage unit 16. Note that the CPU 301 reads the program data from the storage device and executes the program, but as another example, these programs may be acquired from another device via an external network 500.

The example described above shows the case where the information processing devices 10 and 10A include the smartphone 300 and the wearable device 400, but the embodiments are not limited to this case. Since the smartphone 300 is usually provided with the image capturing device 314, the image capturing device 314 may capture the user's field of view. With this configuration, information unique to the place where the user is located can be used, and thus the accuracy of voice recognition or character conversion can be improved.

Note that effects described in the present specification are merely illustrative and not restrictive, and other effects may be produced.

Note that the present technology can also have the following configurations.
(1) An information processing device including:
   a recognition unit configured to recognize input information by a user as a character string; and
   a complement unit configured to complement the recognized character string on the basis of an image analysis result of real space corresponding to a visual field of the user when the character string is recognized.
(2) The information processing device according to (1), in which
   the recognition unit recognizes the input information by the user as a character string of a first form, and
   the complement unit complements the recognized character string of the first form into a character string of a second form on the basis of the image analysis result.
(3) The information processing device according to (2), in which by using conversion candidate information that is a pair of first character information expressed in the second form extracted from the image of the real space corresponding to the visual field of the user and second character information expressing the first character information in the first form, the complement unit performs matching processing on the recognized character string of the first form, and uses the first character information corresponding to the second character information having highest degree of similarity as the character string of the second form.
(4) The information processing device according to (3), in which in a case where the character string of the first form includes a defective part that is an unidentified character, the complement unit performs the matching processing except for the defective part, and complements the defective part of the character string of the first form by using the first character information corresponding to the second character information having highest degree of similarity.
(5) The information processing device according to (3), in which the complement unit performs the matching processing using a character string of a first half including a first character string of the character string of the first form, and complements a remaining character string excluding the character string of the first half of the character string of the first form into the character string of the second form by using the first character information corresponding to the second character information having highest degree of similarity.
(6) The information processing device according to any one of (1) to (5), further including an image analysis unit configured to acquire character information included in the image of the real space corresponding to the visual field of the user and generate the conversion candidate information.
(7) The information processing device according to (4), in which
   the input information includes a voice of the user,
   the character string of the first form includes a phoneme string that is a sequence of phonemes,
   the character string of the second form includes a character string including a sequence of at least one type of character selected from hiragana, katakana, kanji, number, and alphabet,
   the recognition unit recognizes an input phoneme string from the voice of the user, and
   the complement unit uses, as the character string of the second form, the first character information corresponding to the phoneme string obtained as a result of performing the matching processing on the input phoneme string by using a phoneme string in the conversion candidate information.
(8) The information processing device according to (5), in which
   the input information includes the character string obtained by character input by the user,
   the character string of the first form includes a character string including a sequence of at least one type of character selected from hiragana, number, and alphabet,
   the character string of the second form includes a character string including a sequence of at least one type of character selected from hiragana, katakana, kanji, number, and alphabet,
   the recognition unit recognizes an input character string including a first character obtained by character input by the user, and
   the complement unit uses, as the character string of the second form, the first character information corresponding to the character string obtained as a result of performing the matching processing on the input character string by using the character string in the conversion candidate information.
(9) The information processing device according to any one of (3) to (8), further including a dictionary information storage unit configured to store dictionary information that is a pair of third character information expressed in the second form and fourth character information expressing the third character information in the first form,
   in which the complement unit uses the conversion candidate information in preference to the dictionary information during the matching processing.
(10) The information processing device according to (9), in which the complement unit registers the conversion candidate information in the dictionary information.
(11) The information processing device according to (10), in which the complement unit registers the conversion candidate information in the dictionary information in a case where the first character information in the conversion candidate information includes a proper noun.
(12) The information processing device according to (7), further including an image capturing unit configured to capture the image of the real space corresponding to the visual field of the user,
   in which the image capturing unit captures the image when the voice of the user is input.
(13) The information processing device according to (8), further including an image capturing unit configured to capture the image of the real space corresponding to the visual field of the user,
   in which the image capturing unit captures the image at character input time from when an operation of the character input to the information processing device by the user is detected to when the input character string is finished.
(14) The information processing device according to (13), in which the image capturing unit captures a line-of-sight position of the user immediately before performing the character input to the information processing device.
(15) The information processing device according to (13), in which the image capturing unit captures a line-of-sight position of the user when the line-of-sight of the user is pointed again at the line-of-sight position of the user immediately before performing the character input to the information processing device at the character input time.
(16) The information processing device according to any one of (12) to (15), further including a video transmission type or optical transmission type head mount display that is worn on a head of the user,
   in which when the head mount display is worn on the head of the user, the image capturing unit is provided at a position on the head mount display that allows an image forward of the user to be captured.
(17) The information processing device according to any one of (2) to (16), further including an output unit configured to output the character string of the second form complemented by the complement unit.
(18) The information processing device according to (17), in which the output unit includes a display device that displays the character string of the second form, or a voice output device that performs voice output on the character string of the second form.
(19) An information processing method including:
   recognizing input information by a user as a character string; and
   complementing the recognized character string of a first form on the basis of an image analysis result of real space corresponding to a visual field of the user when the character string is recognized.
(20) A program for causing a computer to perform:
   recognizing input information by a user as a character string; and
   complementing the recognized character string on the basis of an image analysis result of real space corresponding to a visual field of the user when the character string is recognized.

### REFERENCE SIGNS LIST

- 10, 10A: Information processing device
- 11: Voice input unit
- 12: Line-of-sight detection unit
- 13: Image capturing unit
- 14: Image analysis unit
- 15: Conversion candidate storage unit
- 16: Voice recognition dictionary storage unit
- 17: Voice recognition unit
- 18: Output unit
- 20: Input detection unit
- 21: Character input unit
- 22: Prediction input dictionary storage unit
- 23: Input processing unit
- 171: Sound waveform conversion unit
- 172: Phoneme string generation unit
- 173, 232: Matching unit
- 174, 233: Complement unit
- 175, 234: Text output unit
- 231: Input character string acquisition unit

## Claims

1. An information processing device comprising:
a recognition unit configured to recognize input information by a user as a character string; and
a complement unit configured to complement the recognized character string on a basis of an image analysis result of real space corresponding to a visual field of the user when the character string is recognized.

2. The information processing device according to claim 1, wherein
the recognition unit recognizes the input information by the user as a character string of a first form, and
the complement unit complements the recognized character string of the first form into a character string of a second form on a basis of the image analysis result.

3. The information processing device according to claim 2, wherein by using conversion candidate information that is a pair of first character information expressed in the second form extracted from the image of the real space corresponding to the visual field of the user and second character information expressing the first character information in the first form, the complement unit performs matching processing on the recognized character string of the first form, and uses the first character information corresponding to the second character information having highest degree of similarity as the character string of the second form.

4. The information processing device according to claim 3, wherein in a case where the character string of the first form includes a defective part that is an unidentified character, the complement unit performs the matching processing except for the defective part, and complements the defective part of the character string of the first form by using the first character information corresponding to the second character information having highest degree of similarity.

5. The information processing device according to claim 3, wherein the complement unit performs the matching processing using a character string of a first half including a first character string of the character string of the first form, and complements a remaining character string excluding the character string of the first half of the character string of the first form into the character string of the second form by using the first character information corresponding to the second character information having highest degree of similarity.

6. The information processing device according to claim 3, further comprising an image analysis unit configured to acquire character information included in the image of the real space corresponding to the visual field of the user and generate the conversion candidate information.

7. The information processing device according to claim 4, wherein
the input information includes a voice of the user,
the character string of the first form includes a phoneme string that is a sequence of phonemes,
the character string of the second form includes a character string including a sequence of at least one type of character selected from hiragana, katakana, kanji, number, and alphabet,
the recognition unit recognizes an input phoneme string from the voice of the user, and
the complement unit uses, as the character string of the second form, the first character information corresponding to the phoneme string obtained as a result of performing the matching processing on the input phoneme string by using a phoneme string in the conversion candidate information.

8. The information processing device according to claim 5, wherein
the input information includes the character string obtained by character input by the user,
the character string of the first form includes a character string including a sequence of at least one type of character selected from hiragana, number, and alphabet,
the character string of the second form includes a character string including a sequence of at least one type of character selected from hiragana, katakana, kanji, number, and alphabet,
the recognition unit recognizes an input character string including a first character obtained by character input by the user, and
the complement unit uses, as the character string of the second form, the first character information corresponding to the character string obtained as a result of performing the matching processing on the input character string by using the character string in the conversion candidate information.

9. The information processing device according to claim 3, further comprising a dictionary information storage unit configured to store dictionary information that is a pair of third character information expressed in the second form and fourth character information expressing the third character information in the first form,
wherein the complement unit uses the conversion candidate information in preference to the dictionary information during the matching processing.

10. The information processing device according to claim 9, wherein the complement unit registers the conversion candidate information in the dictionary information.

11. The information processing device according to claim 10, wherein the complement unit registers the conversion candidate information in the dictionary information in a case where the first character information in the conversion candidate information includes a proper noun.

12. The information processing device according to claim 7, further comprising an image capturing unit configured to capture the image of the real space corresponding to the visual field of the user,
wherein the image capturing unit captures the image when the voice of the user is input.

13. The information processing device according to claim 8, further comprising an image capturing unit configured to capture the image of the real space corresponding to the visual field of the user,
wherein the image capturing unit captures the image at character input time from when an operation of the character input to the information processing device by the user is detected to when the input character string is finished.

14. The information processing device according to claim 13, wherein the image capturing unit captures a line-of-sight position of the user immediately before performing the character input to the information processing device.

15. The information processing device according to claim 13, wherein the image capturing unit captures a line-of-sight position of the user when the line-of-sight of the user is pointed again at the line-of-sight position of the user immediately before performing the character input to the information processing device at the character input time.

16. The information processing device according to claim 12, further comprising a video transmission type or optical transmission type head mount display that is worn on a head of the user,
wherein when the head mount display is worn on the head of the user, the image capturing unit is provided at a position on the head mount display that allows an image forward of the user to be captured.

17. The information processing device according to claim 2, further comprising an output unit configured to output the character string of the second form complemented by the complement unit.

18. The information processing device according to claim 17, wherein the output unit includes a display device that displays the character string of the second form, or a voice output device that performs voice output on the character string of the second form.

19. An information processing method comprising:
recognizing input information by a user as a character string; and
complementing the recognized character string on a basis of an image analysis result of real space corresponding to a visual field of the user when the character string is recognized.

20. A program for causing a computer to perform:
recognizing input information by a user as a character string; and
complementing the recognized character string on a basis of an image analysis result of real space corresponding to a visual field of the user when the character string is recognized.
